# EUROPÄISCHE PATENTSCHRIFT

(11) **EP 4 149 824 B1**
(45) Veröffentlichungstag und Bekanntmachung des Hinweises auf die Patenterteilung: **15.10.2025**
(21) Anmeldenummer: 21726605.5
(22) Anmeldetag: 11.05.2021
(51) Int. Cl.: B62D 53/10

(54) **SATTELKUPPLUNG MIT SICHERUNGSEINRICHTUNG**
FIFTH-WHEEL COUPLING HAVING SECURING APPARATUS
ACCOUPLEMENT DE SELLETTE DOTÉ D'UN APPAREIL DE FIXATION

(30) Priorität: 12.05.2020 DE 102020112815
(43) Veröffentlichungstag der Anmeldung: 22.03.2023
(73) Patentinhaber: SAF-HOLLAND GmbH, 63856 Bessenbach (DE)
(72) Erfinder: KÖSTER, Mario Sebastian, 78351 Bodman-Ludwigshafen (DE); KÜBLER, Randy, 78244 Gottmadingen (DE)
(74) Vertreter: Müller Schupfner & Partner Patent- und Rechtsanwaltspartnerschaft mbB (Muc)
(86) Internationale Anmeldenummer: PCT/EP2021/062462
(87) Internationale Veröffentlichungsnummer: WO 2021/228843

(56) Entgegenhaltungen:
- EP-A1- 0 994 012
- DE-A1- 19 516 101
- DE-A1- 19 820 139
- DE-A1- 3 803 931
- DE-B- 1 256 081
- DE-C- 564 371

## Beschreibung

Die Erfindung betrifft eine Sattelkupplung mit einer Sicherungseinrichtung.

Sattelkupplungen sind bereits aus dem Stand der Technik bekannt, diese dienen dazu, ein Zugfahrzeug mit einem Anhänger, insbesondere mit einem Sattelauflieger, zu verbinden. Hierzu wird ein Königszapfen des Anhängers in die Einfahröffnung der Sattelkupplung eingeführt und dann dort durch einen Verriegelungsmechanismus derart gehalten, dass der Königszapfen nicht mehr aus der Einfahröffnung geführt werden kann, sodass Kupplungs- bzw. Zugkräfte zwischen dem Zugfahrzeug und dem Anhänger übertragen werden können. Um den Königszapfen wieder aus der Sattelkupplung entfernen zu können, wird meist durch ein Betätigungsgriff der Verriegelungsmechanismus geöffnet. Um eine unbewusste oder fehlerhafte Betätigung dieses Betätigungsgriffs zu verhindern, ist es bekannt, eine Sicherungseinrichtung vorzusehen. Diese bekannten Sicherungseinrichtungen sind jedoch meist fehleranfällig und können insbesondere leicht durch Vibrationen ungewollt gelöst werden.

Die EP 0 994 012 A1 betrifft eine Sattelkupplung mit einem Verriegelungsmechanismus, wobei am Handhebel des Verriegelungsmechanismus eine Versperrung angeordnet ist.

Die DE 195 16 101 A1, die DE 38 03 931 A1, die DE 198 20 139 A1 und die DE 1 256 081 betreffen ebenfalls Sattelkupplungsanordnung mit einer Versperrvorrichtung für die Betätigung der Sattelkupplungsmaulsperre.

DE 564 371 C betrifft eine Anhängerkupplung für Sattelschlepper mit einem um eine waagerechte Querachse schwingbaren und in der Wagenlängsrichtung gegen Federwirkung verschiebbaren Sattel, an dem ein um einen senkrechten Bolzen schwenkbarer, aus zwei gleichen, übereinander angeordneten Teilen bestehender Kupplungshaken gelagert ist, der in der Kuppelstellung durch einen Riegel gesperrt wird.

Es ist daher Aufgabe der vorliegenden Erfindung eine Sattelkupplung bereitzustellen, welche ein hohes Maß an Sicherheit bereitstellt.

Diese Aufgabe wird mit einer Sattelkupplung gemäß dem Anspruch 1 gelöst. Weitere vorteilhafte Ausführungsformen und Merkmale ergeben sich aus den Unteransprüchen, der Beschreibung sowie aus den Figuren.

Erfindungsgemäß umfasst eine Sattelkupplung eine Sattelkupplungsplatte, einen Verrieglungsmechanismus, eine Betätigungsvorrichtung und eine Sicherungseinrichtung, wobei die Sattelkupplugsplatte eine Aufliegerfläche und eine Einfahröffnung für einen Königs zapfen ausweist, wobei die Aufliegerfläche eine Normale aufweist, wobei die Einfahröffnung sich in eine Einfahrrichtung erstreckt, wobei der Verriegelungsmechanismus derart ausgelegt ist, dass dieser in einer Schließstellung mittel- und/oder unmittelbar formschlüssig ein Ausfahren des Königszapfens aus der Einfahröffnung verhindert, und wobei der Verriegelungsmechanismus in einer Öffnungsstellung ein Ausfahren des Königszapfens aus der Einfahröffnung ermöglicht, wobei die Betätigungsvorrichtung einen Betätigungsbereich, insbesondere einen Handgriff, und einen Übertragungsbereich aufweist, wobei die Betätigungsvorrichtung sich entlang einer Längsachse erstreckt, wobei die Betätigungsvorrichtung dazu ausgelegt ist, den Verriegelungsmechanismus von der Schließstellung in die Öffnungsstellung zu überführen, insbesondere durch eine Verlagerung der Betätigungsvorrichtung in eine Betätigungsrichtung, wobei der Übertragungsbereich dazu ausgelegt ist, mittel- oder unmittelbar Kräfte und/oder Momente auf den Verriegelungsmechanismus zu übertragen, wobei die Sicherungseinrichtung ein Sperrmittel umfasst, wobei das Sperrmittel derart, insbesondere schwenkbar um eine Schwenkachse, gelagert ist, dass das Sperrmittel in eine Sperrstellung und in eine Freigabestellung bewegbar ist, wobei das Sperrmittel in der Sperrstellung mittel- und/oder unmittelbar formschlüssig ein Überführen des Verriegelungsmechanismus von der Schließstellung in die Öffnungsstellung verhindert. Die erfindungsgemäße Sattelkupplung dient dazu, auf einem ersten Fahrzeug, insbesondere einem Zugfahrzeug, montiert zu werden bzw. zu sein und in Zusammenspiel mit einem Königszapfen eines Anhängers, insbesondere eines Sattelaufliegers, Kupplungskräfte zwischen dem ersten Fahrzeug und dem Anhänger zu übertragen. Die Sattelkupplung umfasst eine Kupplungsplatte, wobei diese Kupplungsplatte unter anderem eine Aufliegerfläche aufweist. Diese Aufliegerfläche der Sattelkupplungsplatte ist insbesondere diejenige Fläche, welche dazu ausgelegt ist, dass in einem eingekuppelten Zustand das zu ziehende Fahrzeug, insbesondere der Sattelauflieger, auf dieser aufliegt.

Vorteilhafterweise ist die Aufliegerfläche im Wesentlichen eben ausgestaltet, um eine geringe Flächenpressung zu erreichen. Unter einem "im Wesentlichen eben" ist dabei zu verstehen, dass die Aufliegerfläche maximal 5 cm, bevorzugt maximal 2 cm, besonders bevorzugt 1 cm, von einer idealen Ebene beabstandet ist. Die Aufliegerfläche weist eine, insbesondere gemittelte, Normale auf. Diese Normale der Aufliegerfläche ist insbesondere derart beschaffen, dass diese in einem eingebauten und eingekuppelten idealisierten Zustand im Wesentlichen parallel zum Vektor der Erdbeschleunigung ausgerichtet ist. In anderen Worten kann dies bedeuten, dass die Normale in einem eingebauten und eingekuppelten Zustand insbesondere vertikal orientiert ist. Die Sattelkupplungsplatte verfügt über eine Einfahröffnung, welche sich in Einfahrrichtung erstreckt. Die Einfahrrichtung ist dabei insbesondere derart orientiert, dass diese in einem eingekuppelten und montieren Zustand der Sattelkupplung in Richtung der Geradeausfahrt des Fahrzeugs weist. Die Einfahröffnung ist insbesondere derart ausgebildet, dass diese sich zwischen zwei Kupplungshörnern der Sattelkupplungsplatte erstreckt. Die Einfahröffnung ist derart gestaltet und dazu ausgelegt, dass in diese ein Königszapfen einfahrbar ist. Die Sattelkupplung verfügt über einen Verriegelungsmechanismus, welcher derart ausgelegt ist, dass dieser in einer Schließstellung ein Ausfahren des Königszapfens aus der Einfahröffnung, insbesondere in Richtung der Einfahrrichtung bzw. entgegen der Einfahrrichtung, aus einer Kupplungsposition formschlüssig verhindert. Der Verriegelungsmechanismus kann insbesondere eine Schlossklaue aufweisen bzw. umfassen, welche in der Schließstellung formschlüssig ein Ausfahren des Königszapfens aus der Kupplungsposition verhindert. Sollte der Verriegelungsmechanismus jedoch in eine Öffnungsstellung verlagert, verschwenkt und/oder gebracht werden, so ist ein Ausfahren bzw. Einfahren des Königszapfens in die / aus der Einfahröffnung möglich. In anderen Worten dient der Verriegelungsmechanismus dazu, formschlüssig den Königszapfen in der eingekuppelten Kupplungsposition zu halten, wenn dieser in der Schließstellung befindlich ist. Sollte der Verrieglungsmechanismus sich jedoch in der Öffnungsstellung befinden, so ist der Königszapfen derart frei beweglich relativ zur Sattelkupplungsplatte, dass der Königszapfen in die Einfahröffnung vollständig ein- oder ausfahrbar ist. Um den Verriegelungsmechanismus von der Schließstellung in die Öffnungsstellung und umgekehrt zu überführen, verfügt die Sattelkupplung über eine Betätigungsvorrichtung. Die Betätigungsvorrichtung umfasst einen Betätigungsbereich und einen Übertragungsbereich. Vorteilhafterweise bilden dabei der Betätigungsbereich und der Übertragungsbereich jeweils gegenüberliegende distale Enden der Betätigungsvorrichtung aus. Alternativ bevorzug können der Betätigungsbereich und der Übertragungsbereich jedoch auch in einem einzigen Bereich realisiert sein. In anderen Worten kann die Betätigungsvorrichtung auch derart ausgebildet sein, dass ein gewisser Bereich der Betätigungsvorrichtung gleichzeitig Betätigungsbereich und Übertragungsbereich ist. Die Betätigungsvorrichtung erstreckt sich entlang einer Längsachse. Die Längsachse ist daher insbesondere diejenige Richtung, in welche sich die Länge der Betätigungsvorrichtung bestimmt. Der Betätigungsbereich der Betätigungsvorrichtung dient dazu, Betätigungskräfte von einem Nutzer und/oder einem Betätigungsaktuator zu empfangen. Vorteilhafterweise weist daher der Betätigungsbereich einen Handgriff oder eine andere Eingriffsmöglichkeit für einen Benutzer auf. Der Übertragungsbereich der Betätigungsvorrichtung hingegen dient dazu, die empfangenen Betätigungskräfte und/oder -momente auf den Verriegelungsmechanismus zu übertragen. Um eine Betätigung der Betätigungsvorrichtung zu erreichen, ist diese insbesondere derart beschaffen, dass diese verlagerbar in eine Betätigungsrichtung ist. Die erfindungsgemäße Sattelkupplung verfügt über eine Sicherungseinrichtung. Diese Sicherungseinrichtung ist insbesondere derart beschaffen, dass diese ein ungewolltes Überführen des Verriegelungsmechanismusses von der Schließstellung in die Öffnungsstellung formschlüssig verhindern kann. Für das formschlüssige Versperren umfasst die Sicherungseinrichtung ein Sperrmittel, wobei das Sperrmittel derart gelagert ist, sodass das Sperrmittel sowohl in eine Sperrstellung als auch in eine Freigabestellung bewegbar ist, insbesondere durch eine schwenkbare Lagerung um eine Schwenkachse. Die Schwenkachse, um welche das Sperrmittel schenkbar gelagert sein kann, kann z.B. durch einen Bolzen und/oder durch eine Schraube, beispielsweise eine Passschraube, gebildet sein. Vorteilhafterweise ist dabei dieser Bolzen bzw. diese Schraube unmittelbar in der Sattelkupplungsplatte gelagert, um eine besonders mechanisch belastbare Lagerung zu erreichen. Das Sperrmittel ist insbesondere derart ausgelegt, dass dieses, wenn das Sperrmittel sich in der Sperrstellung befindet, direkt oder indirekt formschlüssig eine Überführung des Verriegelungsmechanismusses von der Schließstellung in die Öffnungsstellung verhindert. Unter einem "direkten formschlüssigen Verhindern" ist dabei zu verstehen, dass das Sperrmittel selbst einen Anschlag ausbildet, welcher eine formschlüssige Versperrung ausbildet. Bei einem "indirekten formschlüssigen Verhindern" ist das Sperrmittel derart ausgebildet, dass dieses in Zusammenspiel mit anderen Sperrmitteln, welche beispielsweise durch Teile der Sattelkupplungsplatte ausgebildet sein können, formschlüssig eine Überführung des Verriegelungsmechanismusses von der Schließstellung in die Öffnungsstellung verhindert. Das Sperrmittel kann dabei derart gelagert und/oder ausgebildet sein, dass dieses unmittelbar Elemente des Verrieglungsmechanismusses und/oder der Betätigungsvorrichtung in der Sperrstellung kontaktiert. Durch die formschlüssige Verhinderung der Überführung des Verriegelungsmechanismusses von der Schließstellung in die Öffnungsstellung mittels der Sicherungseinrichtung bzw. durch das Sperrmittel der Sicherungseinrichtung kann eine besonders sichere Sattelkupplung erreicht werden.

Erfindungsgemäß ist das Sperrmittel ausschließlich rotatorisch schwenkbar um die Schwenkachse gelagert. Durch die ausschließliche rotatorische Beweglichkeit des Sperrmittels kann eine besonders sichere Sperrung erfolgen.

Vorteilhafterweise erstreckt sich die Schwenkachse zu der Aufliegerfläche quer. Unter "quer" ist dabei in diesem Zusammenhang zu verstehen, dass die Schwenkachse gerade nicht in der Ebene liegt, welche durch die Aufliegerfläche definiert ist. Durch das quere Anordnen der Schwenkachse zu der Aufliegerfläche kann eine besonders kompakte Sattelkupplungsanordnung erreicht werden.

Erfindungsgemäß ist die Schwenkachse im Wesentlichen parallel zur Normalen der Aufliegerfläche. Hierdurch kann eine besonders sichere formschlüssige Sicherung erreicht werden, denn durch diese Ausrichtung der Schwenkachse ist das Sperrmittel besonders unempfindlich gegenüber den häufig auftretenden Vertikalschwingungen. In anderen Worten kann durch diese Orientierung der Schwenkachse ein besonders hohes Maß an Entkopplung der Schwingungen um die Schwenkachse in Relation zu den Vertikalschwingungen des Fahrzeugs und/oder der Sattelkupplungsanordnung erreicht werden. Diese Entkopplung bzw. Unempfindlichkeit gegenüber den häufig auftretenden Vertikalschwingungen führt daher zu einer besonders großen Steigerung der Sicherheit der Sattelkupplung. Unter einem "im Wesentlichen parallel" zur Normalen der Aufliegerfläche ist dabei in diesem Zusammenhang zu verstehen, dass der kleinere Winkel zwischen der Schwenkachse und der Normalen maximal 25°, bevorzugt maximal 15°; besonders bevorzugt maximal 10° und besonders stark bevorzugt maximal 5° beträgt. Um einen besonders hohen Grad an Entkopplung der Schwingungen des Sperrmittels um die Schwenkachse in Relation zu den Vertikalschwingungen der Sattelkupplung bzw. des Fahrzeugs zu erreichen, ist die Schwenkachse vorteilhafterweise parallel zur Normalen der Aufliegerfläche orientiert.

Erfindungsgemäß ist das Sperrmittel an der Sattelkupplungsplatte gelagert. Unter einem Lagern an der Sattelkupplungsplatte ist dabei zu verstehen, dass das Sperrmittel sich vorteilhafterweise direkt an der Sattelkupplungsplatte abstützt bzw. direkt an dieser gelagert ist. Beispielsweise kann dies dadurch erreicht werden, dass bei einer Lagerung des Sperrmittels durch einen Bolzen, durch eine Schraube oder durch eine Passschraube das aufnehmende Gewinde für dieses Mittel direkt in der Sattelkupplungsplatte eingebracht ist. Durch das Lagern des Sperrmittels an der Sattelkupplungsplatte kann eine besonders bauraumsparende und mechanisch belastbare Lagerung erreicht werden, sodass hierdurch ebenfalls die Sicherheit gesteigert werden kann.

Zweckmäßigerweise umfasst die Sicherungseinrichtung einen Aktuator, wobei der Aktuator insbesondere einen Energieanschluss aufweist, wobei der Aktuator vorteilhafterweise derart ausgestaltet ist, dass durch den Aktuator das Sperrmittel von der Sperrstellung in die Freigabestellung überführbar ist. Der Aktuator kann beispielsweise ein pneumatischer oder hydraulischer Zylinder oder ein Elektromotor sein. Durch den Aktuator ist es möglich, automatisch die Sicherungseinrichtung, insbesondere das Sperrmittel der Sicherungseinrichtung, von der Sperrstellung in die Freigabestellung zu überführen und/oder von der Freigabestellung in die Sperrstellung. Durch den Aktuator kann ein besonders hohes Maß an Automatisierung erreicht werden, sodass Betriebskosten eingespart werden können. Der Aktuator verfügt insbesondere über einen Energieanschluss, sodass Energie auf bzw. in den Aktuator geleitet werden kann. Ein derartiger Energieanschluss kann beispielsweise ein elektrischer Anschluss, ein Druckluftanschluss oder ein hydraulischer Anschluss sein.

Vorteilhafterweise verfügt die Sicherungseinrichtung, insbesondere der Aktuator, über ein Vorspannmittel, wobei das Vorspannmittel insbesondere derart ausgelegt ist, dass durch das Vorspannmittel eine Vorspannkraft und/oder ein Vorspannmoment auf das Sperrmittel in Richtung der Sperrstellung ausgeübt ist. Hierdurch kann die Betriebssicherheit der Sattelkupplung weiter erhöht werden, denn durch das Vorspannmittel wird erreicht, dass ein ungewolltes Betätigen beispielsweise bei einem Energieausfall verhindert ist und/oder zumindest erschwert ist. Ein derartiges Vorspannmittel kann beispielsweise durch eine Schraubenfeder, eine Torsionsfeder und/oder durch einen Luftfederbalg gebildet sein. Wie bereits dargelegt, ist das Vorspannmittel insbesondere derart ausgestaltet, dass die in dem Vorspannmittel vorhandene Vorspannkraft und/oder das dort gespeicherte Vorspannmoment derart auf das Sperrmittel einwirkt, dass hierdurch das Sperrmittel in die Sperrstellung vorgespannt ist. In anderen Worten kann dies bedeuten, dass das Vorspannmittel insbesondere derart ausgebildet ist, dass dieses das Sperrmittel in die Sperrstellung vorspannt bzw. drückt.

Vorteilhafterweise umfasst die Sicherungseinrichtung eine Handfreigabevorrichtung. Hierdurch kann auch bei einem Energieausfall oder einer Fehlfunktion sicher eine Freigabe der Sattelkupplung durch einen Benutzer erreicht werden. Eine Handfreigabevorrichtung kann beispielsweise ein Handbügel oder eine Sicherungsleine sein oder umfassen. Die Handfreigabevorrichtung dient in anderen Worten dazu, durch einen Benutzereingriff die Sicherungseinrichtung, insbesondere dessen Sperrmittel, von der Sperrstellung in die Freigabestellung zu überführen.

Vorteilhafterweise weist die Betätigungsvorrichtung einen Verjüngungsabschnitt auf, wobei der Verjüngungsabschnitt sich, insbesondere stetig, in Richtung des Betätigungsbereichs verjüngt und wobei der Verjüngungsabschnitt dazu ausgelegt ist, formschlüssig eine Überführung des Verriegelungsmechanismusses von der Schließstellung in die Öffnungsstellung zu verhindern, wenn das Sperrmittel in der Sperrstellung ist, insbesondere durch einen mittel- oder unmittelbaren Kontakt mit einem Teil der Sattelkupplungsplatte. Hierdurch kann eine besonders kompakte und dennoch sichere formschlüssige Sicherung erreicht werden. Der Verjüngungsabschnitt ist dabei ein Bereich der Betätigungsvorrichtung, in welchem sich die Querschnittsfläche der Betätigungsvorrichtung, insbesondere stetig, verkleinert. Unter einer stetigen Verjüngung ist dabei unter anderem zu verstehen, dass der Verjüngungsabschnitt keine sprunghaften Querschnittsänderungen aufweist. Beispielsweise kann dieser Verjüngungsabschnitt durch einen rampenförmigen und/oder s-förmigen Bereich ausgebildet sein. Diese Verjüngung erfolgt dabei insbesondere in Richtung des Betätigungsbereichs. In anderen Worten kann dies bedeuten, dass der Verjüngungsabschnitt derart ausgebildet ist, dass die Querschnittsfläche im Bereich des Verjüngungsabschnitts in Richtung hin zum Betätigungsbereich kleiner wird. Durch das stetige Verjüngen des Verjüngungsabschnitts kann ein besonders mechanisch belastbarer Abschnitt erreicht werden, denn hierdurch wird insbesondere die Kerbwirkung reduziert und/oder zumindest gering gehalten, was insbesondere aufgrund der Schwächung des Verjüngungsabschnitt durch die dortige Verjüngung besonders vorteilhaft ist. Darüber hinaus kann hierdurch auch noch ein ungewolltes Verhaken oder Versperren verhindert werden, sodass durch eine stetige Ausbildung des Verjüngungsabschnitts auch die Betriebssicherheit erhöht werden kann.

Zweckmäßigerweise ist das Sperrmittel derart ausgelegt, dass dieses selbstsichernd ist. Hierdurch kann die Sicherheit der Sicherungseinrichtung weiter erhöht werden. Unter einer selbstsichernden Ausbildung kann dabei unter anderem Verstanden werden, dass bei einem Ausüben einer Betätigungskraft in Betätigungsrichtung auf die Betätigungsvorrichtung eine Kraft und/oder ein Moment auf das Sperrmittel in Richtung der Sperrstellung auf das Sperrmittel resultiert. In anderen Worten kann dies bedeuten, dass ein selbstsicherndes Sperrmittel derart ausgebildet und/oder angeordnet ist, dass bei einem Versuch den Verriegelungsmechanismus von der Schließstellung in die Öffnungsstellung zu überführen, eine Kraft bzw. ein Moment auf das Sperrmittel wirkt, welches dieses in Richtung der Sperrstellung drückt bzw. vorspannt, wenn das Sperrmittel sich in der Sperrstellung befindet.

Zweckmäßigerweise ist das Sperrmittel eine Sperrklaue. Durch diese Art der Ausgestaltung kann eine besonders kostengünstige und gewichtssparende Konstruktion erreicht werden. Unter einer Sperrklaue ist dabei insbesondere ein hakenförmiges Element zu verstehen, wobei dieses hakenförmige Element durchaus eckig und/oder gerundet ausgestaltet sein kann.

Vorteilhafterweise weist das Sperrmittel einen Kontaktbereich auf, wobei der Kontaktbereich dazu ausgelegt ist, wenn das Sperrmittel in der Sperrstellung befindlich ist, die Betätigungsvorrichtung mittel- und/oder unmittelbar zu kontaktieren oder kontaktieren zu können. In anderen Worten kann der Kontaktbereich des Sperrmittels derjenige Bereich sein, welcher dazu ausgelegt ist, die Betätigungsvorrichtung zu kontaktieren, wenn das Sperrmittel in der Sperrstellung befindlich ist. Durch diesen mittel- oder unmittelbaren Kontakt zwischen dem Sperrmittel und der Betätigungsvorrichtung kann eine besonders kompakte und bauraumsparende Sicherungseinrichtung erreicht werden.

In einer vorteilhaften Ausführungsform ist das Sperrmittel derart angeordnet bzw. ausgebildet, dass die Projektion des Kontaktbereichs auf die Längsachse zumindest teilweise näher an dem Betätigungsbereich ist als die Projektion der Schwenkachse des Sperrmittels auf die Längsachse. Die Projektion der Schwenkachse bzw. des Kontaktbereichs auf die Längsachse erfolgt dabei insbesondere durch eine orthogonale Projektion auf die Längsachse. Maßgeblich für diese Projektion ist dabei die Stellung, bei der sich das Sperrmittel in der Sperrstellung befindet. Durch diese Art der Anordnung bzw. der Ausgestaltung des Sperrmittels kann in besonders einfacher und kostengünstiger Art ein selbstsicherndes Sperrmittel erreicht werden.

Vorteilhafterweise ist die Sattelkupplung derart ausgebildet, dass eine Überführung des Sperrmittels, insbesondere formschlüssig, von der Freigabestellung in die Sperrstellung verhindert ist, wenn der Verriegelungsmechanismus sich in der Öffnungsstellung befindet, insbesondere durch einen Kontakt mit der Betätigungsvorrichtung. Hierdurch kann eine besonders einfache und sichere Bedienung der Sattelkupplung erreicht werden, denn hierdurch kann insbesondere eine ungewollte Fehlbedienung verhindert werden. Eine derartige Ausgestaltung der Sattelkupplung kann beispielsweise durch die Verwendung von Sensoren und Mitteln erreicht werden, wobei die Mittel, insbesondere Elektromagnete, eine Verlagerung oder Verschwenkung des Sperrmittels verhindern, wenn die Sensoren erfassen, dass der Verriegelungsmechanismus sich in der Öffnungsstellung befindet. Alternativ oder zusätzlich bevorzugt kann dies auch dadurch erreicht werden, dass die Betätigungsvorrichtung und/oder das Sperrmittel derart ausgebildet und/oder angeordnet sind, dass, insbesondere durch einen Bereich der Betätigungsvorrichtung, formschlüssig eine Überführung des Sperrmittels in die Sperrstellung verhindert ist, wenn der Verriegelungsmechanismus sich in der Öffnungsstellung befindet.

Zweckmäßigerweise weist die Sattelkupplung einen Ausrückzylinder auf, wobei der Ausrückzylinder derart angeordnet und ausgebildet ist, dass die Betätigungsvorrichtung in die Betätigungsrichtung durch den Ausrückzylinder mittel- und/oder unmittelbar verlagerbar ist. Durch das Vorsehen eines Ausrückzylinders kann eine automatische Überführung des Verriegelungsmechanismus von der Schließstellung in die Öffnungsstellung oder umgekehrt erreicht werden. Daher kann durch das Vorsehen eines derartigen Ausrückzylinders der Automatisierungsgrad der Sattelkupplung erhöht werden, was insbesondere in Hinblick auf ein autonomes Fahren besonders vorteilhaft ist.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1:: Eine Ansicht einer erfindungsgemäßen Sattelkupplung von unten;
- Figur 2:: Eine Seitenansicht einer erfindungsgemäßen Sattelkupplung;
- Figur 3:: Eine Detailansicht einer Sattelkupplung im Bereich der Sicherungseinrichtung, wobei die Sicherungseinrichtung sich in der Sperrstellung befindet und
- Figur 4:: Eine Detailansicht einer Sattelkupplung im Bereich der Sicherungseinrichtung, wobei die Sicherungseinrichtung sich in der Freigabestellung befindet.

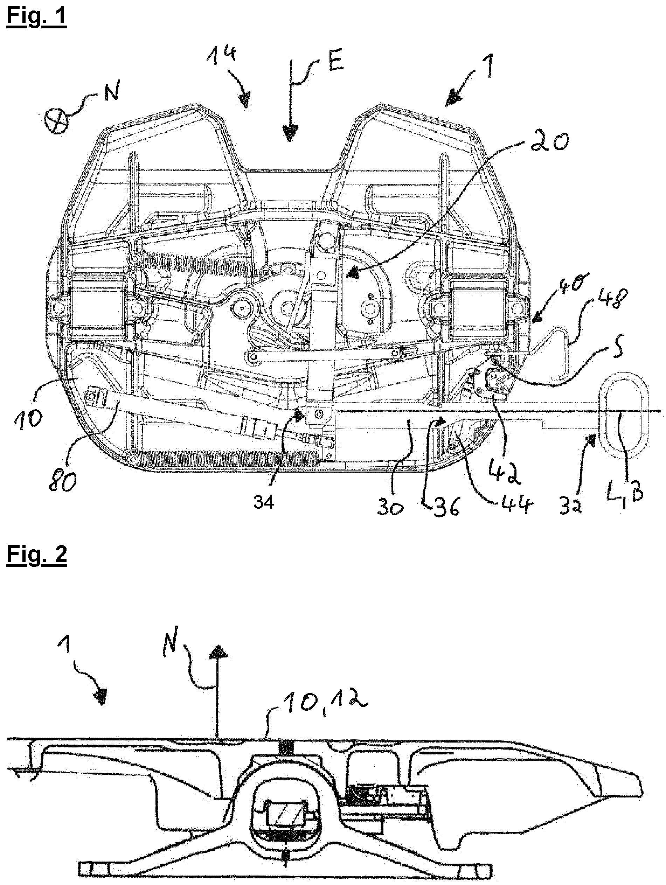

In der **Figur 1** ist eine Sattelkupplung 1 gezeigt, wobei die Sattelkupplung 1 über eine Sattelkupplungsplatte 10 verfügt. Die Sattelkupplungsplatte 10 ist in der Figur 1 von unten dargestellt, sodass die Aufliegerfläche der Sattelkupplungsplatte in der Figur 1 nicht erkennbar ist. In der Figur 1 ist jedoch die Normale N der Aufliegerfläche schematisch dargestellt. Die Sattelkupplungsplatte 10 weist zwischen zwei Sattelkupplungshörnern eine Einfahröffnung 14 auf, welche sich in die Einfahrrichtung E erstreckt. In der Figur 1 ist die Sattelkupplung 1 dabei derart dargestellt, dass der Verriegelungsmechanismus 20 sich in der Schließstellung befindet, sodass ein Ausrücken bzw. ein Hinausfahren des Königszapfens entgegen der Einfahrrichtung E aus der Einfahröffnung 14 formschlüssig durch den Verriegelungsmechanismus 20 verhindert ist. Der Verriegelungsmechanismus 20 kann über die Betätigungsvorrichtung 30 von der Schließstellung in die Öffnungsstellung überführt werden. Dies kann beispielsweise durch den Ausrückzylinder 80 oder durch eine händische Betätigung der Betätigungsvorrichtung 30 erreicht werden. Hierzu verfügt die Betätigungsvorrichtung 30 über einen Betätigungsbereich 32, welcher beispielsweise - wie in der Figur 1 - durch eine Handeingriffsöse gebildet sein kann. Die Betätigungsvorrichtung 30 ist in Betätigungsrichtung B verlagerbar, um den Verriegelungsmechanismus 20 von der Schließstellung in die Öffnungsstellung zu überführen. Um diese Kräfte bzw. Momente von der Betätigungsvorrichtung 30 auf den Verriegelungsmechanismus 20 zu übertragen, verfügt die Betätigungsvorrichtung 30 über einen Übertragungsbereich 34. Die Betätigungsrichtung B entspricht dabei in dem dargestellten Ausführungsbeispiel der Längsachse L, in welcher sich die Betätigungsvorrichtung 30 erstreckt. In etwa mittig zwischen dem Übertragungsbereich 34 und dem Betätigungsbereich 32 verfügt die Betätigungsvorrichtung 30 über einen Verjüngungsabschnitt 36, wobei in dem Verjüngungsabschnitt 36 sich der Querschnitt der Betätigungsvorrichtung 30 stetig in Richtung des Betätigungsbereichs 32 verjüngt. Um eine formschlüssige Sicherung des Verriegelungsmechanismusses 20 bzw. der Betätigungsvorrichtung 30 zu erreichen, verfügt die Sattelkupplung 1 über eine Sicherungseinrichtung 40. Diese Sicherungseinrichtung 40 weist ein Sperrmittel 42 auf, welches schwenkbar um die Schwenkachse S gelagert ist. In der in Figur 1 dargestellten Situation ist die Schwenkachse S parallel zur Normalen N der Aufliegerfläche 12 orientiert. Um eine automatische Betätigung des Sperrmittels 42 der Sicherungseinrichtung 40 zu erreichen, verfügt die Sicherungseinrichtung 40 über einen Aktuator 44 in Form eines Druckluftzylinders. Um jedoch auch eine händische Überführung des Sperrmittels 42 von der in Figur 1 dargestellten Sperrstellung in die Freigabestellung zu erreichen, verfügt die Sicherungseinrichtung 40 auch über eine Handfreigabevorrichtung 48 in Form eines Handbügels.

In der **Figur 2** ist eine Seitenansicht einer Sattelkupplung 1 gezeigt. Die Sattelkupplung 1 verfügt über eine Sattelkupplungsplatte 10, welche wiederrum eine Aufliegerfläche 12 aufweist. Diese Aufliegerfläche 12 weist eine Normale N.

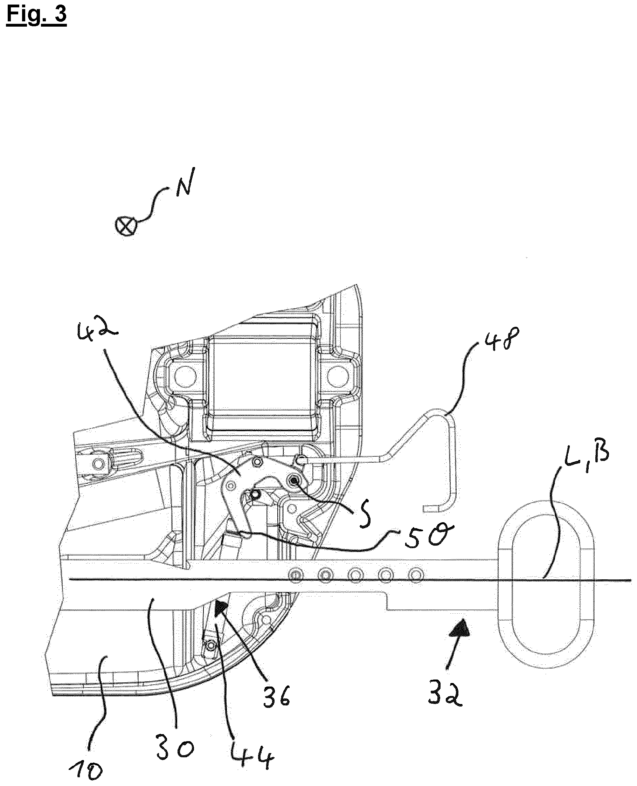

In der **Figur 3** ist eine Detailansicht der Sattelkupplung 1 im Bereich der Sicherungseinrichtung 40 gezeigt. In der in Figur 3 befindet sich das Sperrmittel 42 in der Freigabestellung. Das Sperrmittel 42 ist dabei über einen die Schwenkachse S bildenden Bolzen schwenkbar um die Schwenkachse S relativ zu der Sattelkupplungsplatte 10 gelagert. Das Sperrmittel 42 ist als eine Sperrklaue ausgebildet und verfügt über einen Kontaktbereich 50. Dieser Kontaktbereich 50 ist dazu ausgelegt, in der Sperrstellung unmittelbar mit Teilen der Betätigungsvorrichtung 30 zu kontaktieren und/oder kontaktieren zu können. Die Betätigungsvorrichtung 30 erstreckt sich in Richtung der Längsachse L, wobei diese Längsachse L parallel bzw. zumindestens im Wesentlichen parallel zur Betätigungsrichtung B ist. Prinzipiell kann die in Figur 3 dargestellte Detailansicht dabei zu der in der Figur 1 und/oder zu der in der Figur 2 dargestellten Sattelkupplung 1 gehörig sein.

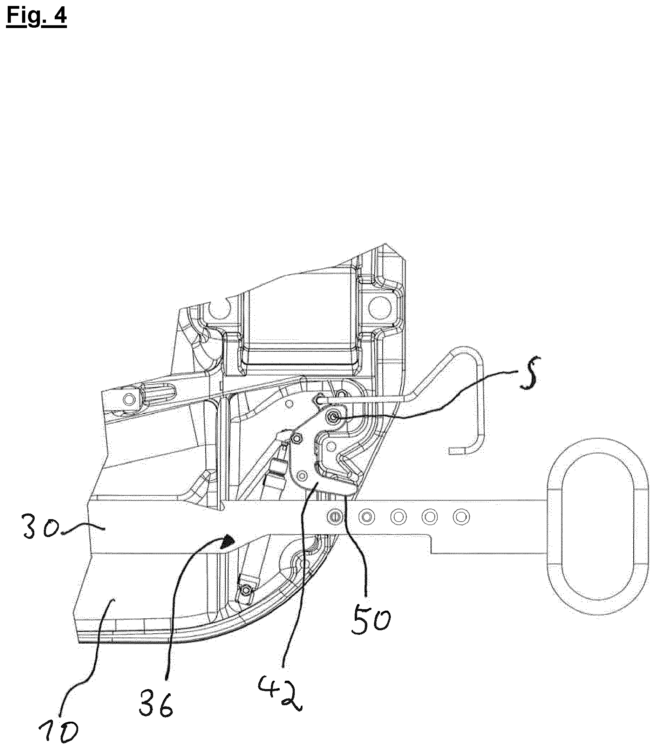

In der **Figur 4** ist die bereits in der Figur 3 dargestellte Situation dargestellt, wobei in der Figur 4 sich das Sperrmittel 42 in der Sperrstellung befindet. Wie der Figur 4 entnehmbar ist, ist dabei eine Verlagerung der Betätigungsvorrichtung 30 in die Betätigungsrichtung B formschlüssig durch das Zusammenspiel des Sperrmittels 42 mit dem Verjüngungsabschnitt 36 der Betätigungsvorrichtung 30 und mit der Sattelkupplungsplatte 10 verhindert. Daher ist in der Figur 4 eine Ausführungsform der Erfindung gezeigt, bei welcher das Sperrmittel in der Sperrstellung indirekt formschlüssig eine Überführung des Verriegelungsmechanismusses 20 von der Schließstellung in die Öffnungsstellung verhindert.

### Bezugszeichenliste:

- 1: - Sattelkupplung
- 10: - Sattelkupplungsplatte
- 12: - Aufliegerfläche
- 14: - Einfahröffnung
- 20: - Verriegelungsmechanismus
- 30: - Betätigungsvorrichtung
- 32: - Betätigungsbereich
- 34: - Übertragungsbereich
- 36: - Verjüngungsabschnitt
- 40: - Sicherungseinrichtung
- 42: - Sperrmittel
- 44: - Aktuator
- 46: - Vorspannmittel
- 48: - Handfreigabevorrichtung
- 50: - Kontaktbereich
- 80: - Ausrückzylinder
- B: - Betätigungsrichtung
- E: - Einfahrrichtung
- L: - Längsachse
- N: - Normale der Aufliegerfläche
- S: - Schwenkachse

## Patentansprüche

1. Sattelkupplung (1) umfassend eine Sattelkupplungsplatte (10), einen Verriegelungsmechanismus (20), eine Betätigungsvorrichtung (30) und eine Sicherungseinrichtung (40),
wobei die Sattelkupplungsplatte (10) eine Aufliegerfläche (12) und eine Einfahröffnung (14) für einen Königszapfen aufweist,
wobei die Aufliegerfläche (12) eine Normale (N) aufweist,
wobei die Einfahröffnung (14) sich in eine Einfahrrichtung (E) erstreckt,
wobei der Verriegelungsmechanismus (20) derart ausgelegt ist, dass dieser in einer Schließstellung mittelbar und/oder unmittelbar formschlüssig ein Ausfahren des Königszapfens aus der Einfahröffnung (14) verhindert und
wobei der Verriegelungsmechanismus (20) in einer Öffnungsstellung ein Ausfahren des Königszapfens aus der Einfahröffnung (14) ermöglicht,
wobei die Betätigungsvorrichtung (30) einen Betätigungsbereich (32), insbesondere einen Handgriff, und einen Übertragungsbereich (34) aufweist,
wobei die Betätigungsvorrichtung (30) sich entlang einer Längsachse (L) erstreckt, wobei die Betätigungsvorrichtung (30) dazu ausgelegt ist, den Verriegelungsmechanismus (20) von der Schließstellung in die Öffnungsstellung zu überführen, insbesondere durch eine Verlagerung der Betätigungsvorrichtung (30) in eine Betätigungsrichtung (B),
wobei der Übertragungsbereich (34) dazu ausgelegt ist, mittel oder unmittelbar Kräfte und/oder Momente auf den Verriegelungsmechanismus (20) zu übertragen, wobei die Sicherungseinrichtung (40) ein Sperrmittel (42) umfasst,
wobei das Sperrmittel (42) derart schwenkbar um eine Schwenkachse (S) gelagert ist, dass das Sperrmittel (42) in eine Sperrstellung und in eine Freigabestellung bewegbar ist,
wobei das Sperrmittel (42) in der Sperrstellung formschlüssig eine Überführung des Verriegelungsmechanismus (20) von der Schließstellung in die Öffnungsstellung verhindert,
**dadurch gekennzeichnet, dass** die Schwenkachse (S) im Wesentlichen parallel zur Normalen (N) ist, und
wobei das Sperrmittel (42) an der Sattelkupplungsplatte (10) gelagert ist,
wobei das Sperrmittel (42) derart ausgebildet ist, dass dieses selbstsichernd ist, **dadurch gekennzeichnet, dass** das Sperrmittel (42) ausschließlich rotatorisch schwenkbar um die Schwenkachse (S) gelagert ist.

2. Sattelkupplung (1) gemäß einem der vorhergehenden Ansprüche,
wobei die Sicherungseinrichtung (40) einen Aktuator (44) umfasst,
wobei der Aktuator (44) insbesondere einen Energieanschluss aufweist,
wobei der Aktuator (44) vorteilhafterweise derart ausgelegt ist, dass durch den Aktuator (44) das Sperrmittel (42) von der Sperrstellung in die Freigabestellung überführbar ist.

3. Sattelkupplung (1) gemäß einem der vorhergehenden Ansprüche,
wobei die Sicherungseinrichtung (40), insbesondere der Aktuator (44), ein Vorspannmittel (46) umfasst,
wobei das Vorspannmittel (46) insbesondere derart ausgelegt ist, dass durch das Vorspannmittel (46) eine Vorspannkraft und/oder ein Vorspannmoment auf das Sperrmittel (42) in Richtung der Sperrstellung ausgeübt wird.

4. Sattelkupplung (1) gemäß einem der vorhergehenden Ansprüche,
wobei die Sicherungseinrichtung (40) eine Handfreigabevorrichtung (48) umfasst.

5. Sattelkupplung (1) gemäß einem der vorhergehenden Ansprüche,
wobei die Betätigungsvorrichtung (30) einen Verjüngungsabschnitt (36) aufweist, wobei der Verjüngungsabschnitt (36) sich, insbesondere stetig, in Richtung des Betätigungsbereichs (32) verjüngt,
und wobei der Verjüngungsabschnitt (36) dazu ausgelegt ist,
formschlüssig eine Überführung des Verriegelungsmechanismus (20) von der Schließstellung in die Öffnungsstellung zu verhindern,
wenn das Sperrmittel (42) in der Sperrstellung ist,
insbesondere durch einen mittel- und/oder unmittelbaren Kontakt mit einem Teil der Sattelkupplungsplatte (10).

6. Sattelkupplung (1) gemäß einem der vorhergehenden Ansprüche,
wobei das Sperrmittel (42) eine Sperrklaue ist.

7. Sattelkupplung (1) gemäß einem der vorhergehenden Ansprüche,
wobei das Sperrmittel (42) einen Kontaktbereich (50) aufweist,
wobei der Kontaktbereich (50) dazu ausgelegt ist, wenn das Sperrmittel (42) in der Sperrstellung ist,
die Betätigungsvorrichtung (30) mittel oder unmittelbar zu kontaktieren.

8. Sattelkupplung (1) gemäß Anspruch 7,
wobei die Projektion des Kontaktbereichs (50) auf die Längsachse (L) zumindest teilweise näher an dem Betätigungsbereich (32) ist als die Projektion der Schwenkachse (S) auf die Längsachse (L),
wenn sich das Sperrmittel (42) in der Sperrstellung befindet.

9. Sattelkupplung (1) gemäß einem der vorhergehenden Ansprüche,
wobei die Sattelkupplung (1) derart ausgebildet ist, dass eine Überführung des Sperrmittels (42), insbesondere formschlüssig,
von der Freigabestellung in die Sperrstellung verhindert ist,
wenn der Verriegelungsmechanismus (20) sich in der Öffnungsstellung befindet.

10. Sattelkupplung (1) gemäß einem der vorhergehenden Ansprüche,
wobei die Sattelkupplung (1) einen Ausrückzylinder (80) aufweist,
wobei der Ausrückzylinder (80) derart angeordnet und ausgebildet ist, dass die Betätigungsvorrichtung (30) in die Betätigungsrichtung (B) durch den Ausrückzylinder (80) mittel und/oder unmittelbar verlagerbar ist.

## Claims

1. Fifth wheel coupling (1) comprising a fifth wheel coupling plate (10), a locking mechanism (20), an actuating device (30) and a securing device (40),
wherein the fifth wheel coupling plate (10) has a semitrailer surface (12) and a retraction opening (14) for a king pin,
wherein the semitrailer surface (12) has a normal (N),
wherein the retraction opening (14) extends in a retraction direction (E),
wherein the locking mechanism (20) is designed such that, in a closed position, it indirectly and/or directly positively prevents the kingpin from extending out of the retraction opening (14), and
wherein the locking mechanism (20), in an open position, enables the kingpin to be extended out of the retraction opening (14),
wherein the actuating device (30) has an actuating area (32), in particular a handle, and a transmission region (34),
wherein the actuating device (30) extends along a longitudinal axis (L),
wherein the actuating device (30) is designed to transfer the locking mechanism (20) from the closed position to the open position, in particular by displacing the actuating device (30) in an actuating direction (B),
wherein the transmission area (34) is designed to directly or indirectly transmit forces and/or torques to the locking mechanism (20),
wherein the securing device (40) comprises a locking means (42),
wherein the locking means (42) is pivotably mounted about a pivot axis (S) such that the locking means (42) can be moved into a locking position and into a release position,
wherein the locking means (42) in the locking position positively prevents a transfer of the locking mechanism (20) from the closed position to the open position,
**characterized in that** the pivot axis (S) is essentially parallel to the normal (N), and wherein the locking means (42) is mounted on the fifth wheel coupling plate (10), wherein the locking means (42) is designed in such a way that it is self-locking,
**characterized in that** the locking means (42) is mounted so as to be exclusively rotationally pivotable about the pivot axis (S).

2. Fifth wheel coupling (1) according to any one of the preceding claims,
wherein the securing device (40) comprises an actuator (44),
wherein the actuator (44) in particular comprises an energy connection,
wherein the actuator (44) is advantageously designed such that the locking means (42) can be transferred from the locking position to the release position by the actuator (44).

3. Fifth wheel coupling (1) according to any one of the preceding claims,
wherein the securing device (40), in particular the actuator (44), comprises a biasing means (46),
wherein the biasing means (46) is designed in particular such that a biasing force and/or a biasing torque is exerted by the biasing means (46) on the locking means (42) in the direction of the locking position.

4. Fifth wheel coupling (1) according to any one of the preceding claims,
wherein the securing device (40) comprises a manual release device (48).

5. Fifth wheel coupling (1) according to any one of the preceding claims,
wherein the actuating device (30) has a tapered section (36),
wherein the tapered section (36) tapers, in particular continuously, in the direction of the actuating area (32),
and wherein the tapered section (36) is designed to
positively prevent a transfer of the locking mechanism (20) from the closed position to the open position,
when the locking means (42) is in the locking position,
in particular by direct and/or indirect contact with a part of the fifth wheel coupling plate (10).

6. Fifth wheel coupling (1) according to any one of the preceding claims,
wherein the locking means (42) is a locking claw.

7. Fifth wheel coupling (1) according to any one of the preceding claims,
wherein the locking means (42) has a contact area (50),
wherein the contact area (50) is adapted to contact, when the locking means (42) is in the locking position,
the actuating device (30) indirectly or directly.

8. Fifth wheel coupling (1) according to claim 7,
wherein the projection of the contact area (50) onto the longitudinal axis (L) is at least partially closer to the actuating area (32) than the projection of the pivot axis (S) onto the longitudinal axis (L),
when the locking means (42) is in the locking position.

9. Fifth wheel coupling (1) according to any one of the preceding claims,
wherein the fifth wheel coupling (1) is designed in such a way that a transfer of the locking means (42), in particular form-fit
from the release position to the locking position is prevented,
when the locking mechanism (20) is in the open position.

10. Fifth wheel coupling (1) according to any one of the preceding claims,
wherein the fifth wheel coupling (1) has a disengaging cylinder (80),
wherein the disengaging cylinder (80) is arranged and designed such that the actuating device (30) can be displaced in the actuating direction (B) by the disengaging cylinder (80) indirectly and/or directly.

## Revendications

1. Sellette d'attelage (1) comprenant une plaque de sellette d'attelage (10), un mécanisme de verrouillage (20), un dispositif d'actionnement (30) et un dispositif de fixation (40),
dans laquelle
la plaque de sellette d'attelage (10) présente une surface semi-remorque (12) et une ouverture d'insertion (14) pour un pivot d'attelage,
la surface semi-remorque (12) présente une normale (N),
l'ouverture d'insertion (14) s'étend dans une direction d'insertion (E),
en position fermée, le mécanisme de verrouillage (20) est conçu de manière à empêcher indirectement et/ou directement par complémentarité de forme le pivot d'attelage de sortir de l'ouverture d'insertion (14), et
en position ouverte, le mécanisme de verrouillage (20) permet au pivot d'attelage de sortir de l'ouverture d'insertion (14),
le dispositif d'actionnement (30) présente une zone d'actionnement (32), en particulier une poignée, et une zone de transmission (34),
le dispositif d'actionnement (30) s'étend le long d'un axe longitudinal (L),
le dispositif d'actionnement (30) est conçu pour transférer le mécanisme de verrouillage (20) de la position fermée à la position ouverte, en particulier par un déplacement du dispositif d'actionnement (30) dans une direction d'actionnement (B),
la zone de transmission (34) est conçue pour transmettre indirectement ou directement des forces et/ou des moments au mécanisme de verrouillage (20),
le dispositif de fixation (40) comprend un moyen de blocage (42),
le moyen de blocage (42) est monté de manière à pouvoir pivoter autour d'un axe de pivotement (S) de telle sorte que le moyen de blocage (42) peut être déplacé vers une position de blocage et vers une position de libération,
en position de blocage, le moyen de blocage (42) empêche par complémentarité de forme un transfert du mécanisme de verrouillage (20) de la position fermée à la position ouverte,
**caractérisée en ce que** l'axe de pivotement (S) est sensiblement parallèle à la normale (N), et
le moyen de blocage (42) est monté sur la plaque de sellette d'attelage (10), le moyen de blocage (42) est conçu de manière à être autobloquant,
**caractérisée en ce que** le moyen de blocage (42) est monté de manière à pouvoir pivoter exclusivement en rotation autour de l'axe de pivotement (S).

2. Sellette d'attelage (1) selon l'une des revendications précédentes,
dans laquelle le dispositif de fixation (40) comprend un actionneur (44),
en particulier, l'actionneur (44) présente une connexion électrique,
avantageusement, l'actionneur (44) est conçu de manière à ce que le moyen de blocage (42) puisse être transféré de la position de blocage à la position de libération par l'actionneur (44).

3. Sellette d'attelage (1) selon l'une des revendications précédentes,
dans laquelle le dispositif de fixation (40), en particulier l'actionneur (44), comprend un moyen de précontrainte (46),
en particulier, le moyen de précontrainte (46) est conçu de manière à ce qu'une force de précontrainte et/ou un moment de précontrainte soit exercé(e) sur le moyen de blocage (42) en direction de la position de blocage par le moyen de précontrainte (46).

4. Sellette d'attelage (1) selon l'une des revendications précédentes,
dans laquelle le dispositif de fixation (40) comprend un dispositif de libération manuel (48).

5. Sellette d'attelage (1) selon l'une des revendications précédentes,
dans laquelle le dispositif d'actionnement (30) présente une portion rétrécie (36),
la portion rétrécie (36) se rétrécit, en particulier de manière continue, vers la zone d'actionnement (32), et
la portion rétrécie (36) est conçue pour empêcher par complémentarité de forme un transfert du mécanisme de verrouillage (20) de la position fermée à la position ouverte lorsque le moyen de blocage (42) est en position de blocage, en particulier par contact indirect et/ou direct avec une partie de la plaque de sellette d'attelage (10).

6. Sellette d'attelage (1) selon l'une des revendications précédentes,
dans laquelle le moyen de blocage (42) est une griffe de blocage.

7. Sellette d'attelage (1) selon l'une des revendications précédentes,
dans laquelle le moyen de blocage (42) présente une zone de contact (50),
la zone de contact (50) est conçue pour entrer en contact direct ou indirect avec le dispositif d'actionnement (30) lorsque le moyen de blocage (42) est en position de blocage.

8. Sellette d'attelage (1) selon la revendication 7,
dans laquelle la projection de la zone de contact (50) sur l'axe longitudinal (L) est au moins en partie plus proche de la zone d'actionnement (32) que la projection de l'axe de pivotement (S) sur l'axe longitudinal (L), lorsque le moyen de blocage (42) est en position de blocage.

9. Sellette d'attelage (1) selon l'une des revendications précédentes,
dans laquelle la sellette d'attelage (1) est conçue de telle sorte qu'un transfert du moyen de blocage (42), en particulier par complémentarité de forme, de la position de libération à la position de blocage est empêché lorsque le mécanisme de verrouillage (20) est en position ouverte.

10. Sellette d'attelage (1) selon l'une des revendications précédentes,
dans laquelle la sellette d'attelage (1) comprend un vérin de déploiement (80),
le vérin de déploiement (80) est agencé et conçu de telle sorte que le dispositif d'actionnement (30) puisse être déplacé directement et/ou indirectement dans la direction d'actionnement (B) par le vérin de déploiement (80).
